# FASCICULE DE BREVET EUROPEEN

(11) **EP 0 511 907 B1**
(45) Date de publication et mention de la délivrance du brevet: **11.01.1995**
(21) Numéro de dépôt: 92401200.8
(22) Date de dépôt: 27.04.1992
(51) Int. Cl.: F16F 13/00

(54) **Perfectionnements apportés aux dispositifs antivibratoires hydrauliques**
Verbesserungen an hydraulischer Antischwingungsvorrichtungen
Improvements to hydraulic anti-vibration devices

(30) Priorité: 29.04.1991 FR 9105246
(43) Date de publication de la demande: 04.11.1992
(73) Titulaire: HUTCHINSON, F-75008 Paris (FR)
(72) Inventeur: Dubos, Daniel, F-92600 Asnières (FR)
(74) Mandataire: Behaghel, Pierre

(56) Documents cités:
- EP-A- 0 322 239
- EP-A- 0 371 536
- EP-A- 0 409 707
- EP-A- 0 410 896
- DE-A- 2 454 834
- DE-A- 3 913 819
- FR-A- 2 635 155
- US-A- 3 715 798

## Description

L'invention concerne les dispositifs antivibratoires hydrauliques destinés à être interposés aux fins d'amortissement et de liaison, voire de support, entre deux éléments rigides tels qu'un châssis de véhicule et que le moteur de ce véhicule.

Elle concerne plus particulièrement, parmi ces dispositifs, ceux qui comportent :
- une armature rigide annulaire et un plot rigide coaxial à cette armature, solidarisables respectivement avec les deux éléments rigides à réunir,
- une paroi annulaire en élastomère résistant à la compression axiale, interposée entre l'armature et le plot,
- un boîtier hydraulique étanche également formé entre l'armature et le plot,
- un piston rigide prolongeant le plot à l'intérieur du boîtier,
- une membrane flexible et étanche raccordant la périphérie du piston à l'armature annulaire, l'ensemble du piston et de la membrane divisant l'intérieur du boîtier en deux chambres,
- un passage étranglé évidé dans le piston et faisant communiquer en permanence les deux chambres entre elles,
- et une masse de liquide remplissant les deux chambres et le passage étranglé.

Comme on le sait, avec un tel dispositif, l'application sur le plot par rapport à l'armature, ou inversement, d'oscillations de relativement grande amplitude (généralement supérieure à 0,5 mm) et de relativement basse fréquence (généralement de l'ordre de 5 à 20 Hz) orientées selon la direction axiale a pour effet de refouler le liquide de l'une des deux chambres dans l'autre et inversement à travers le passage étranglé, avec mise en résonance de la masse liquide ainsi refoulée lorsque la fréquence desdites oscillations atteint une valeur prédéterminée qui est fonction du rapport entre la longueur axiale et la section droite du passage étranglé, cette mise en résonance assurant un excellent amortissement ou filtrage des oscillations concernées.

Dans les modes de réalisation qui ont été proposés jusqu'à ce jour pour les dispositifs du genre ci-dessus (voir le document US-4 199 128), la membrane était constituée par une feuille ondulée immergée dans le boîtier et prolongeant le piston radialement vers l'extérieur.

La raideur dynamique de cette membrane devait être suffisamment élevée pour que les déformations du dispositif se traduisent par des refoulements du liquide à travers le passage étranglé plutôt que par des déformations de ladite membrane.

Cette raideur s'ajoutait à celle de la paroi annulaire en élastomère, ce qui diminuait les performances du dispositif au plan des amortissements et filtrages réalisés.

L'invention a pour but, surtout, de remédier à un tel inconvénient en améliorant par conséquent les performances du dispositif en ce qui concerne l'amortissement et le filtrage.

A cet effet les dispositifs antivibratoires hydrauliques du genre en question selon l'invention sont essentiellement caractérisés en ce que la membrane est constituée par une feuille imperméable pratiquement inextensible plissée selon un soufflet tubulaire de révolution autour de l'axe du dispositif et flexible axialement, mais pratiquement indéformable transversalement sous l'effet d'une variation de pression interne, en ce qu'une zone annulaire intermédiaire interne du soufflet est fixée de façon étanche sur la périphérie du piston, en ce que les deux extrémités axiales du soufflet sont reliées de façon étanche aux deux extrémités axiales d'un manchon rigide qui entoure ce soufflet et qui est lui-même fixé sur l'armature annulaire, et en ce que deux petits soufflets du genre du soufflet ci-dessus sont montés à l'intérieur de celui-ci, axialement de part et d'autre du piston, de façon à relier respectivement de manière étanche aux deux extrémités du manchon deux portions annulaires centrales du piston, l'ensemble constitué par ce piston et les trois soufflets formant le boîtier ci-dessus et l'ensemble formé par ce boîtier et le manchon formant une capsule hydraulique annulaire autonome fixée, d'une part, au niveau du piston, par vissage d'un boulon central traversant ce piston, sur le plot et, d'autre part, au niveau du manchon, sur l'armature annulaire.

Il convient de rappeler ici que des dispositifs antivibratoires présentant certaines analogies avec ceux qui viennent d'être définis ont été décrits dans le document EP-A-0 371 536.

Mais, dans ces dispositifs, le boîtier hydraulique n'était pas formé entre l'armature annulaire et le plot, mais porté par le piston d'une façon totalement indépendante de l'armature, et son amovibilité n'était pas possible.

Dans des modes de réalisation préférés, on a recours en outre à l'une et/ou à l'autre des dispositions suivantes :
- l'une des deux chambres est délimitée en partie par un clapet monté de façon à pouvoir vibrer avec une amplitude de débattement limitée, la face de ce clapet, opposée à ladite chambre, délimitant en partie l'autre chambre ou une troisième chambre déformable,
- le clapet selon l'alinéa précédent est un anneau monté entre deux doubles sièges annulaires formés dans les faces en regard de deux plaques juxtaposées constituant le piston et communiquant avec les deux chambres par un large passage,
- au moins l'un des soufflets est agencé de façon à pouvoir être plissé selon des lignes préétablies, lignes éventuellement renforcées par des cerceaux,
- au moins l'un des soufflets est constitué en une matière thermoplastique moulée,
- au moins l'un des soufflets est constitué par une toile imperméabilisée,
- au moins l'un des soufflets est constitué en métal, notamment en acier inoxydable.

L'invention comprend, mises à part ces dispositions principales, certaines autres dispositions qui s'utilisent de préférence en même temps et dont il sera plus explicitement question ci-après.

Dans ce qui suit, l'on va décrire un mode de réalisation préféré de l'invention en se référant au dessin ci-annexé d'une manière bien entendu non limitative.

La figure 1, de ce dessin, montre très schématiquement un dispositif antivibratoire hydraulique établi selon l'invention en coupe axiale coudée selon I-I, figure 2, en son état de charge, c'est-à-dire en la position moyenne qu'il occupe en service réel.

La figure 2 montre en vue du dessous à plus petite échelle l'un des éléments constitutifs dudit dispositif.

Le dispositif considéré comprend :
- une armature annulaire rigide 1 d'axe vertical Z destinée à être fixée sur une caisse 2 de véhicule,
- une tige centrale 3 coaxiale à l'armature 1 dont la tête est solidarisée avec une rondelle 4 et prolongée par un embout fileté 5 en attente destiné à être fixé sur le moteur à combustion interne du véhicule considéré,
- et une paroi annulaire 6 en élastomère, de préférence tronconique, reliant l'armature annulaire 1 à la tête de la tige 3 et plus précisément à la rondelle 4 solidaire de cette tige.

Ce dispositif comprend en outre :
- un manchon cylindique rigide 7 formant une sorte de boîte sans fond et propre à constituer la portion inférieure de l'armature annulaire 1,
- un disque rigide 8 monté à la base de la tige 3 et formant piston,
- un ensemble de trois soufflets 9, 10 et 11 propres à former avec le disque 8 deux chambres de liquide A et B disposées axialement de part et d'autre du disque, à l'intérieur du manchon 7,
- un canal étroit ou passage étranglé 12 évidé dans le disque et faisant communiquer en permanence entre elles les deux chambres A et B,
- et une masse de liquide L remplissant ces deux chambres ainsi que le canal étroit 12.

Le liquide L est par exemple un mélange antigel eau-glycol, ou une huile minérale ou autre de faible viscosité.

Les trois soufflets se présentent avantageusement sous la forme de tubes plissés de révolution dont l'allure générale est de préférence cylindrique, mais pourrait être différente et notamment tronconique, au moins en partie.

Le soufflet 9, qui est disposé à l'intérieur du manchon 7, à une petite distance de celui-ci, est fixé de façon étanche au niveau de l'une de ses arêtes rentrantes 9₁, sur la périphérie du disque 8 et ses deux extrémités axiales sont raccordées de façon étanche aux deux extrémités axiales du manchon 7.

Quant aux deux soufflets 10 et 11, ils sont disposés axialement de part et d'autre du disque 8 et relient chacun de façon étanche une zone annulaire centrale de ce disque à une extrémité axiale du manchon 7.

Chacun des soufflets 9, 10 et 11 présente à la fois :
- une grande flexibilité verticale,
- et une grande résistance aux déformations selon les directions horizontales sous l'effet des variations de pression interne, de façon telle que les déplacements relatifs verticaux de l'armature 1 par rapport à la tige 3 soient intégralement transformés en refoulements du liquide L dans le canal étroit 12 et non pas en déformations horizontales des soufflets.

On constitue à cet effet lesdits soufflets par des feuilles imperméables pratiquement inextensibles en un matériau compatible avec le liquide à contenir, plissées selon des suites axiales de bandes tronconiques à concavités généralement inversées de proche en proche.

Les plissages de ces feuilles sont avantageusement guidés en prévoyant à l'avance par rainurage des lignes de plissage dans celles-ci et en agençant chaque soufflet de façon telle que les plissages selon ces lignes soient déjà amorcés pour son état détendu.

Les lignes en question sont de préférence circulaires.

Elles peuvent être renforcées et rendues quasiment indéformables par des cerceaux, notamment métalliques.

Les feuilles en question sont notamment formées en une matière thermoplastique moulée telle que celle diffusée sous l'appellation HYTREL par la Société DU PONT DE NEMOURS.

Elles peuvent également être formées par une toile imperméabilisée ou même par un métal tel que l'acier inoxydable.

Dans le mode de réalisation illustré, le manchon 7 est recouvert par une platine 13 perforée en son centre, prolongée radialement par deux pattes 14 évidées par des trous 15 pour des boulons de fixation ou analogues.

Ladite platine 13 présente des rebords 16 en arc de cercle qui sont rabattus vers l'extérieur puis vers le bas et vers l'intérieur de façon à assembler entre eux par sertissage les bords correspondants des soufflets 9 et 10 et du manchon 7.

Dans ce mode de réalisation également, la fixation du disque 8 sur le pied de la tige 3 est effectuée de manière facilement amovible à l'aide d'un boulon 17 traversant le centre de ce disque et vissé dans un alésage fileté complémentaire 18 de la tige.

Le serrage de ce boulon 17 peut assurer par lui-même, au repos, l'application axiale, contre la face inférieure de la caisse 2, de l'ensemble de la capsule ou cassette définie par le manchon 7 coiffé par la platine 13 et son contenu.

Mais la fixation de l'ensemble du dispositif sur la caisse est effectuée surtout à l'aide de systèmes boulons-écrous traversant les trous 15 et d'autres trous en regard 22 évidés dans la caisse.

Le dispositif qui vient d'être décrit permet d'amortir les oscillations appliquées verticalement sur la tige 3 par rapport à l'armature 1 si la fréquence de ces oscillations est suffisamment basse, c'est-à-dire généralement comprise entre 5 et 20 Hz et si leur amplitude est suffisante, savoir généralement supérieure à 0,5 mm.

Lors de la phase de chaque cycle correspondant à la compression du ressort 6, c'est-à-dire lors de l'application d'un effort vers le bas sur la tige 3, le disque 8 est repoussé vers le bas par rapport à l'armature 1 et donc au manchon 7 et une portion de volume du liquide L contenu dans la chambre inférieure B est refoulée vers la chambre supérieure A à travers le canal étroit 12, ce qui se traduit par de légères déformations par flexion verticale des trois soufflets 9,10 et 11.

Lors de la phase de détente consécutive correspondant à la dilatation du ressort 3 et à une remontée de la tige 3 et du disque 8, la portion de volume liquide ci-dessus mentionnée repasse de la chambre A à la chambre B vers le bas à travers le canal 12.

Ce va-et-vient d'un petit volume de liquide dans le canal 12 est effectué au rythme des oscillations à amortir et, pour une fréquence donnée fₒ de ces oscillations, correspondant à un dimensionnement donné du canal 12 -et plus précisément à une valeur donnée du rapport entre la longueur de ce canal et sa largeur moyenne ou "diamètre fictif"-, il se produit dans le petit volume en question un phénomène de résonance engendrant l'amortissement desdites oscillations.

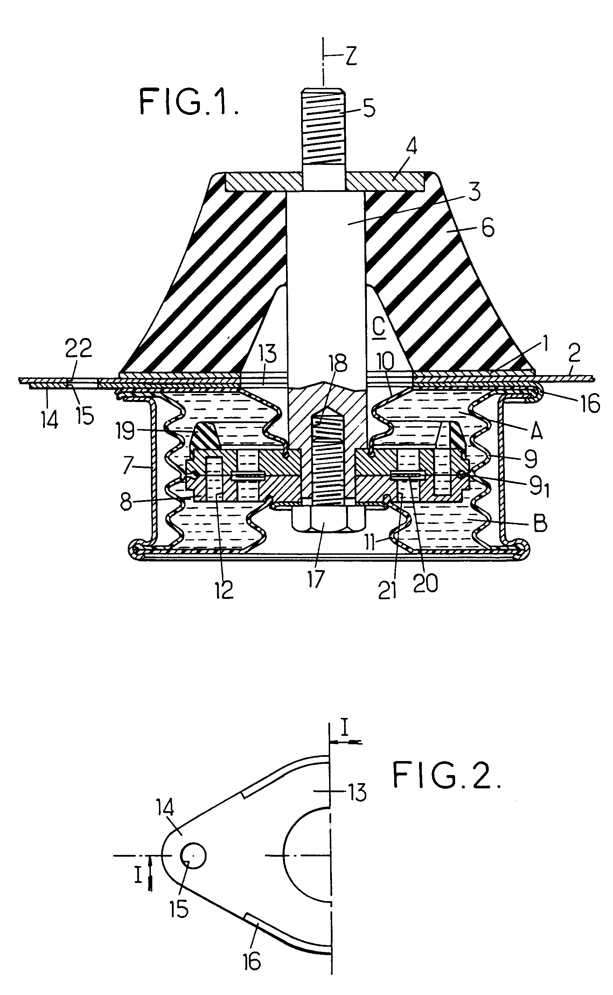

On voit également sur la figure 1 :
- un bourrelet annulaire 19 en élastomère porté par la face supérieure du disque 8 et propre à limiter souplement les fins de courses ascendantes du piston par butée de ce bourrelet contre la face inférieure en regard de la platine 13 ou de la caisse 2,
- un large passage 21 évidé axialement dans le disque 8 et reliant entre elles les poches A et B,
- et un clapet mobile 20 monté dans ce canal 21 de façon à pouvoir vibrer verticalement entre des sièges rigides appropriés, l'amplitude des débattements verticaux de ce clapet étant limitée à une valeur faible, généralement de l'ordre de 0,5 mm.

Le passage 21 présente en section horizontale la forme générale d'un anneau délimité par deux cercles concentriques et il est interrompu par des pontets radiaux de liaison (non représentés), les lumières qui subsistent entre ces pontets affectant la forme de haricots.

Le clapet 20, quant à lui, est constitué par une rondelle plate, de préférence enrobée dans une chemise en caoutchouc (non représentée) pour éviter les bruits de contact, et il est monté flottant entre ses sièges annulaires, lesquels constituent les flancs de deux gorges annulaires concentriques évidées respectivement dans la face cylindrique intérieure et dans la face cylindrique extérieure du passage 21, gorges ouvertes radialement l'une vers l'autre : pour rendre possibles la formation de ces gorges et le logement du clapet, on constitue le piston par deux plaques juxtaposées, comme illustré.

Comme on le sait, la présence entre les deux chambres A et B de ce clapet 20 -qui pourrait être remplacé par une membrane flexible étanche raccordée de manière étanche aux sièges qui l'encadrent- permet de filtrer le transfert des vibrations de relativement petite amplitude (généralement inférieure à 0,5 mm) et de fréquence relativement élevée (généralement supérieure à 20 Hz) de la tige 3 à la caisse 2.

En suite de quoi, et quel que soit le mode de réalisation adopté, on obtient finalement un dispositif antivibratoire hydraulique dont la constitution et le fonctionnement résultent suffisamment de ce qui précède.

Ce dispositif présente un certain nombre d'avantages par rapport à ceux antérieurement connus, en particulier :
- la qualité des amortissements et filtrages réalisés en raison notamment de la grande flexibilité verticale des soufflets associée à l'absence de déformations horizontales de ceux-ci,
- et la possibilité de rendre totalement indépendante l'un de l'autre le "ressort" ou paroi 6 en élastomère résistant à la compression et la "capsule" ou "cassette" hydraulique délimitée par le manchon 7, ce qui permet de fabriquer ces deux pièces indépendamment l'une de l'autre et d'adapter à volonté sur un même ressort 6 une pluralité de capsules correspondant à des fréquences d'amortissement différentes, le montage de chaque capsule sur un ressort donné 6 pouvant être rendu très facilement amovible par simple dévissage d'un boulon 17.

Comme il va de soi, et comme il résulte d'ailleurs déjà de ce qui précède, l'invention ne se limite nullement à ceux de ses modes d'application et de réalisation qui ont été plus spécialement envisagés ; elle en embrasse, au contraire, toutes les variantes, de l'objet de la revendication 1.

## Revendications

1. Dispositif antivibratoire hydraulique comportant une armature rigide annulaire (1) et un plot rigide (3-5) coaxial à cette armature, une paroi annulaire en élastomère résistant à la compression axiale (6), interposée entre l'armature et le plot, un boîtier hydraulique étanche également formé entre l'armature et le plot, un piston rigide (8) prolongeant le plot à l'intérieur du boîtier, une membrane flexible et étanche raccordant la périphérie du piston (8) à l'armature annulaire, l'ensemble du piston et de la membrane divisant l'intérieur du boîtier en deux chambres (A,B), un passage étranglé (12) évidé dans le piston et faisant communiquer en permanence les deux chambres entre elles, et une masse de liquide (L) remplissant les deux chambres et le passage étranglé, caractérisé en ce que la membrane est constituée par une feuille imperméable pratiquement inextensible plissée selon un soufflet tubulaire (9) de révolution autour de l'axe du dispositif et flexible axialement, mais pratiquement indéformable transversalement sous l'effet d'une variation de pression interne, en ce qu'une zone annulaire intermédiaire interne du soufflet (9) est fixée de façon étanche sur la périphérie du piston (8), en ce que les deux extrémités axiales du soufflet (9) sont reliées de façon étanche aux deux extrémités axiales d'un manchon rigide (7) qui entoure ce soufflet et qui est lui-même fixé sur l'armature annulaire (1), et en ce que deux petits soufflets (10,11) du genre du soufflet ci-dessus sont montés à l'intérieur de celui-ci, axialement de part et d'autre du piston (8), de façon à relier respectivement de manière étanche aux deux extrémités du manchon deux portions annulaires centrales du piston, l'ensemble constitué par ce piston (8) et les trois soufflets (9,10,11) formant le boîtier ci-dessus et l'ensemble formé par ce boîtier et le manchon (7) formant une capsule hydraulique annulaire autonome fixée, d'une part, au niveau du piston, par vissage d'un boulon central (17) traversant ce piston, sur le plot (3-5) et, d'autre part, au niveau du manchon (7), sur l'armature annulaire (1).

2. Dispositif antivibratoire hydraulique selon la revendication 1, caractérisé en ce que l'une des deux chambres (A,B) est délimitée en partie par un clapet (20) monté de façon à pouvoir vibrer avec une amplitude de débattement limitée, la face, de ce clapet, opposée à ladite chambre, délimitant en partie l'autre chambre ou une troisième chambre déformable.

3. Dispositif antivibratoire hydraulique selon la revendication 2, caractérisé en ce que le clapet (20) est un anneau monté entre deux doubles sièges annulaires formés dans les faces en regard de deux plaques juxtaposées constituant le piston et communiquant avec les deux chambres par un large passage (21).

4. Dispositif antivibratoire hydraulique selon l'une quelconque des précédentes revendications, caractérisé en ce qu'au moins l'un des soufflets (9,10,11) est agencé de façon à pouvoir être plissé selon des lignes préétablies, lignes éventuellement renforcées par des cerceaux.

5. Dispositif antivibratoire hydraulique selon l'une quelconque des précédentes revendications, caractérisé en ce qu'au moins l'un des soufflets (9,10,11) est constitué en une matière thermoplastique moulée.

6. Dispositif antivibratoire hydraulique selon l'une quelconque des revendications 1 à 4, caractérisé en ce qu'au moins l'un des soufflets (9,10,11) est constitué par une toile imperméabilisée.

7. Dispositif antivibratoire hydraulique selon l'une quelconque des revendications 1 à 4, caractérisé en ce qu'au moins l'un des soufflets (9,10,11) est constitué en métal, notamment en acier inoxydable.

## Claims

1. Hydraulic vibration-damping device including a rigid annular frame (1) and a rigid stud (3-5) coaxial with this frame, an annular elastomer wall resistant to axial compression (6), interposed between the frame and stud, a fluidtight hydraulic housing also formed between the frame and stud, a rigid piston (8) extending the stud inside the housing, a flexible fluidtight membrane connecting the periphery of the piston (8) to the annular frame, the assembly consisting of the piston and membrane dividing the inside of the housing into two chambers (A, B), a throttled passage (12) formed in the piston and putting the two chambers permanently in communication with each other, and a mass of liquid (L) filling the two chambers and the throttled passage, characterised in that the membrane consists of a practically inextensible, impervious sheet folded to form a tubular bellows (9) of revolution around the axis of the device and axially flexible, but practically non-deformable transversely under the effect of any internal pressure variation, in that an intermediate annular zone internal to the bellows (9) is fixed, so as to be fluidtight, to the periphery of the piston (8), in that the two axial ends of the bellows (9) are connected, so as to be fluidtight, to the two axial ends of a rigid sleeve (7) which surrounds this bellows and which is itself fixed to the annular frame (1), and in that two small bellows (10, 11) of the same type as the aforesaid bellows are mounted inside the latter, axially on each side of the piston (8), so as to connect respectively, in a fluidtight manner, to the two ends of the sleeve, two central annular portions of the piston, the assembly consisting of this piston (8) and the three bellows (9, 10, 11) forming the above-mentioned housing, and the assembly formed by this housing and the sleeve (7) forming a self-contained annular hydraulic capsule fixed on the one hand, at the piston, by the screwing of a central bolt (17) passing through this piston, to the stud (3-5), and on the other hand, at the sleeve (7), to the annular frame (1).

2. Hydraulic vibration-damping device according to Claim 1, characterised in that one of the two chambers (A, B) is partly delimited by a valve (20) mounted so as to be able to vibrate with a limited degree of movement, the face of this valve which is opposite to the said chamber partly delimiting the other chamber or a third deformable chamber.

3. Hydraulic vibration-damping device according to Claim 2, characterised in that the valve (20) is a ring mounted between two double annular seats formed in the opposite faces of two juxtaposed plates constituting the piston and communicating with the two chambers through a wide passage (21).

4. Hydraulic vibration-damping device according to any one of the preceding claims, characterised in that at least one of the bellows (9, 10, 11) is arranged so as to be able to be folded along predetermined lines, the said lines optionally being reinforced by hoops.

5. Hydraulic vibration-damping device according to any one of the preceding claims, characterised in that at least one of the bellows (9, 10, 11) is formed from a moulded thermoplastic material.

6. Hydraulic vibration-damping device according to any one of Claims 1 to 4, characterised in that at least one of the bellows (9, 10, 11) is formed from a cloth which has been rendered impervious.

7. Hydraulic vibration-damping device according to any one of Claims 1 to 4, characterised in that at least one of the bellows (9, 10, 11) is formed from metal, notably stainless steel.

## Patentansprüche

1. Hydraulische Antischwingungsvorrichtung, enthaltend eine starre ringförmige Versteifung (1) und einen zu dieser Versteifung koaxial angeordneten starren Schaft (3-5), eine ringförmige Wand (6) aus elastomerem Material, die gegenüber einem in axialer Richtung wirkenden Druck widerstandsfähig ist und die zwischen die Versteifung und den Schaft eingefügt ist, ein dichtes Hydraulikgehäuse, das gleichfalls zwischen der Versteifung und dem Schaft ausgebildet ist, einen starren Kolben (8), der den Schaft in das Innere des Gehäuses verlängert, eine flexible und dichte Membran, die den Umfang des Kolbens (8) mit der ringförmigen Versteifung verbindet, wobei die Baugruppe des Kolbens und der Membran das Innere des Gehäuses in zwei Kammern (A, B) trennt, einen verengten Durchgang (12), der im Kolben ausgespart ist und die beiden Kammern dauerhaft miteinander verbindet, und eine Masse von Flüssigkeit (L), die die beiden Kammern und den verengten Durchgang ausfüllt, dadurch gekennzeichnet, daß die Membran aus einem undurchlässigen, praktisch nicht dehnbaren Blatt gebildet wird, der als röhrenförmiger Balgen (9) um die Achse der Vorrichtung in Umfangsrichtung gefaltet und in axialer Richtung flexibel ist, jedoch unter der Einwirkung einer inneren Druckänderung in Querrichtung praktisch nicht verformt werden kann, daß im Inneren des Balgen (9) ein zwischengefügter ringförmiger Bereich abdichtend auf der Umfangsfläche des Kolbens (8) befestigt ist, daß die beiden axialen Enden des Balgen (9) abdichtend mit den beiden axialen Enden einer starren Hülse (7) verbunden sind, die diesen Balgen umgibt und die ihrerseits an der ringförmigen Versteifung (1) befestigt ist, und daß zwei kleine Balgen (10, 11), die in ihrer Art dem oben genannten Balgen entsprechen, in dessen Innerem angeordnet sind, und zwar in axialer Richtung auf beiden Seiten des Kolbens (8), und zwar so, daß sie jeweils abdichtend zwei zentrale ringförmige Bereiche des Kolbens mit den beiden Enden der Hülse verbinden, wobei die aus dem Kolben (8) und den drei Balgen (9, 10, 11) bestehende Baugruppe das oben genannte Gehäuse bildet und wobei die aus dem Gehäuse und der Hülse (7) bestehende Baugruppe eine selbständige, ringförmige Hydraulikkapsel bildet, die einerseits in Höhe des Kolbens durch das Verschrauben eines durch den Kolben reichenden Zentralbolzens (17) am Schaft (3-5) und andererseits in Höhe der Hülse (7) an der ringförmigen Versteifung (1) befestigt ist.

2. Hydraulische Antischwingungsvorrichtung nach Anspruch 1, dadurch gekennzeichnet, daß eine der beiden Kammern (A, B) teilweise durch eine Klappe (20) begrenzt wird, die so angeordnet ist, daß sie mit einer begrenzten Bewegungsamplitude vibrieren kann, wobei die dieser Kammer abgewandte Seite der Klappe teilweise die andere Kammer oder eine dritte verformbare Kammer begrenzt.

3. Hydraulische Antischwingungsvorrichtung nach Anspruch 2, dadurch gekennzeichnet, daß die Klappe (20) als Ring ausgebildet ist, der zwischen zwei ringförmigen Doppelsitzen angeordnet ist, die in den einander gegenüberliegenden Stirnflächen von zwei aneinanderliegenden Platten ausgebildet sind, die den Kolben bilden und über einen großen Durchgang (21) mit den beiden Kammern in Verbindung stehen.

4. Hydraulische Antischwingungsvorrichtung nach einem der vorangegangenen Ansprüche, dadurch gekennzeichnet, daß wenigstens einer der Balgen (9, 10, 11) so angetrieben wird, daß er längs von vorbereiteten Linien gefaltet werden kann, wobei die Linien durch Bügel verstärkt sein können.

5. Hydraulische Antischwingungsvorrichtung nach einem der vorangegangenen Ansprüche, dadurch gekennzeichnet, daß wenigstens einer der Balgen (9, 10, 11) aus einem thermoplastischen Material geformt ist.

6. Hydraulische Antischwingungsvorrichtung nach einem der Ansprüche 1 bis 4, dadurch gekennzeichnet, daß wenigstens einer der Balgen (9, 10, 11) aus einem undurchlässig gemachten Stoff besteht.

7. Hydraulische Antischwingungsvorrichtung nach einem der Ansprüche 1 bis 4, dadurch gekennzeichnet, daß wenigstens einer der Balgen (9, 10, 11) aus Metall, insbesondere aus rostfreiem Stahl, besteht.
